# EUROPEAN PATENT APPLICATION

(11) **EP 1 958 746 A1**
(43) Date of publication of application: **20.08.2008**
(21) Application number: 07121185.8
(22) Date of filing: 21.11.2007
(51) Int. Cl.: B28D 1/04, B28D 1/32, B23D 45/04

(54) **Cutting means for a slate cutter**

(30) Priority: 15.02.2007 CN 200720034598 U
(71) Applicant: Ma, Weiguo, 215002 Suzhou (CN)
(72) Inventor: Ma, Weiguo, 215002 Suzhou (CN)
(74) Representative: Hengelhaupt, Jürgen

(57) **Abstract**

The present invention relates to a cutting means for a slate cutter, wherein the cutting means comprises a base (1), a blade (2) and a electric motor (3) for driving the blade (2), and wherein a support arm (4) is mounted on the base (1), the support arm (4) comprises a bracket (5) which is able to rotate perpendicularly to the surface of the blade (2), a frame (6) is attached to the bracket, the electric motor (3) is secured to the frame (6), one side of which is fixed to the bracket (5) with a dowel pin, which is located eccentrically with respect to the axis of the blade (2).

## Description

### Filed of the invention

This invention generally relates to a cutting means for a slate cutter, particularly to a cutting means of which the cutting angle and cutting depth is adjustable.

### Background

At present, slates and tiles are widely used in fitment, in order to cut the slates and tiles in to different sizes, a cutter is needed. There are two types of commonly used cutters: portable cutter and fixed cutter, most of the fixed cutters could only cut vertically, which could not cut at different angles, although the portable cutter is convenient to cut at different angels, it requires more time and energy, most important of all, the cutting precision of the portable cutter is unsatisfiable.

### Summary of the invention

The purpose of the invention is to provide a cutting means for a slate cutter, which is able to cut at different angles and the height of the blade is adjustable, that ensures precise work, requires less energy and enhances work efficiency.

The technical solution of the invention is a cutting means for a slate cutter, comprising: a base, a blade and a electric motor for driving the blade, a support arm is mounted on the base, the support arm comprises a bracket which is able to rotate perpendicularly to the surface of the blade, a frame is attached to the bracket, the electric motor is secured to the frame, one side of which is fixed to the bracket via a dowel pin, which is located eccentrically with respect to the axis of the blade.

Said bracket has a L-shaped configuration, a fan shaped plate arranged perpendicularly to the surface of the blade with an arc-groove is provided on the support arm, the fan shaped plate is provided with a first bolt, which passes through the arc-groove and is connected to the vertical part of the bracket; the said frame has a U-shaped configuration, the front end of the bottom of the frame is connected to the horizontal part of the bracket via a first dowel pin and can rotate about the first dowel pin, a pressure plate is attached to the rear side of the bracket via a second dowel pin and can rotate about the second dowel pin, the first and second dowel pins are perpendicular to the surface of the blade, a elongated opening is defined along the longitudinal direction of the pressure plate, a second bolt passes through the elongated opening connected to the rear side of the frame.

### The advantages of the invention are as follows:

1. The first bolt passing through the arc-groove on the support arm and fixes the bracket, cutting angle could be adjusted by changing the position of the first bolt in the arc-groove.
2. The front end of the frame is coupled to the bracket via a dowel pin, the cutting depth could be regulated by lifting or bringing down the rear end of the frame.
3. The rear end of the bracket is coupled with a pressure plate by the second dowel pin, the second bolt passes through the elongated opening of the pressure plate connecting the rear end of the frame, in order to lift or bring down the frame, it just needs to change the position of the second bolt in elongated opening.

### The invention will be further described in combination with drawings and embodiments in the following.

### Brief Description of The Drawings

Figure 1 is a schematic drawing of the structure of the invention.
Figure 2 is the right view of figure 1.
Figure 3 is the left view of figure 1.

Where: 1 base; 2 blade; 3 electric motor; 4 support arm; 5 bracket; 6 frame; 7 fan shaped plate; 8 arc-groove; 9 first bolt; 10 first dowel pin; 11 second dowel pin; 12 pressure plate; 13 elongated opening; 14 second bolt.

### Detailed Description Of The Embodiments

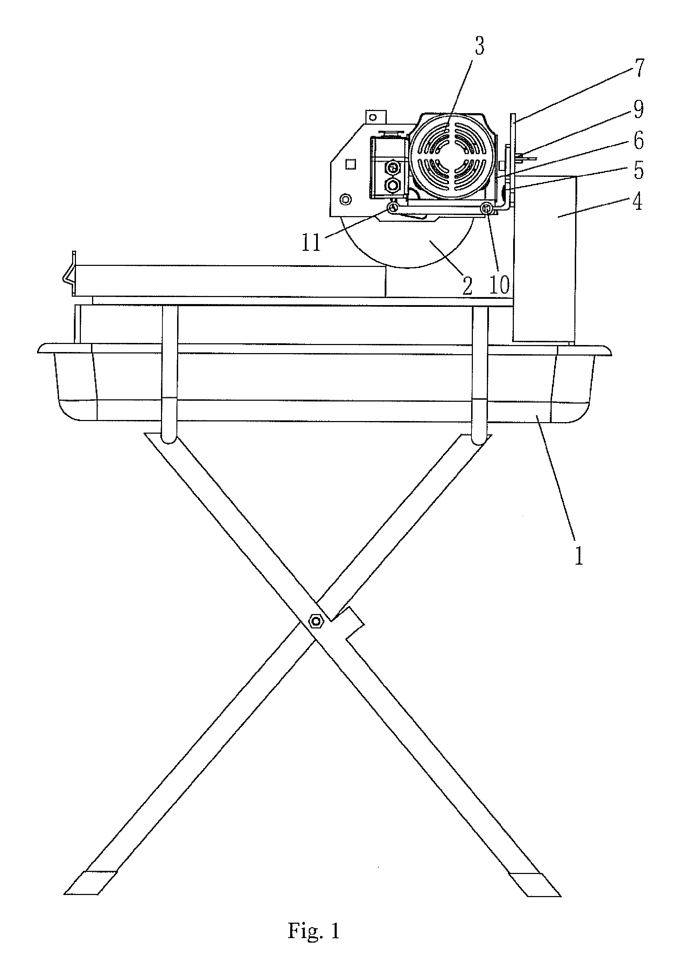

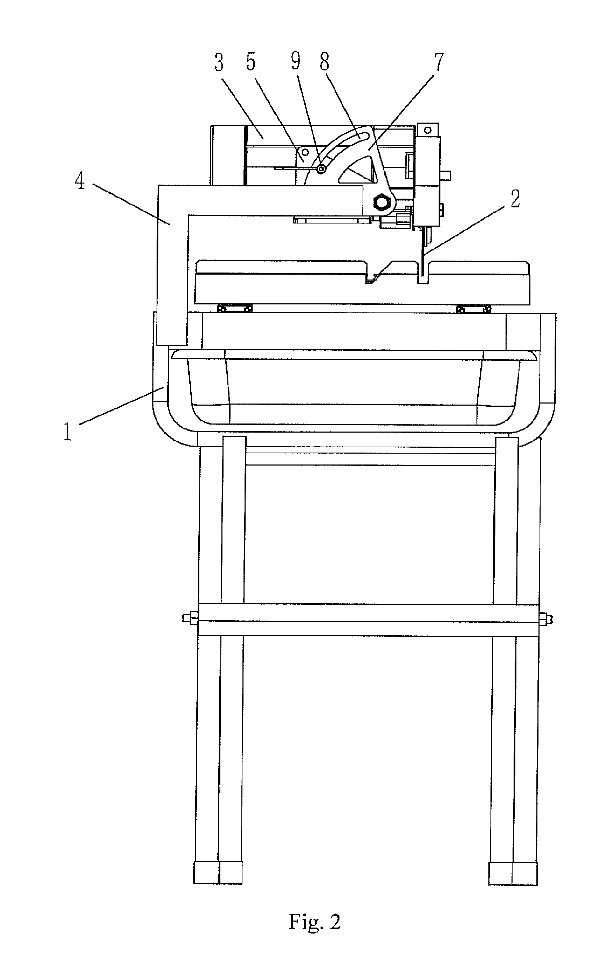

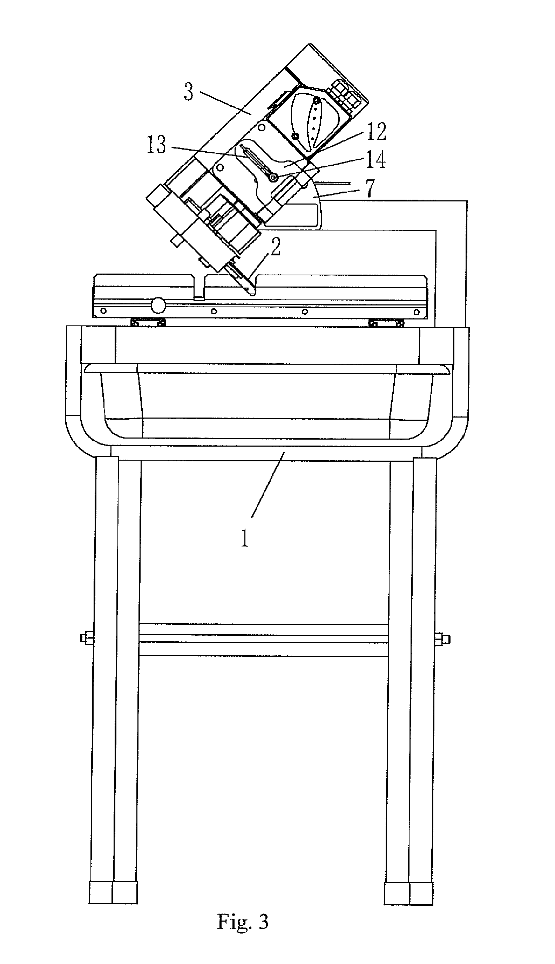

Embodiment: As showed in figure 1-3, a cutting means for a slate cutter, comprising:
a base 1, a blade 2 and a electric motor 3, a support arm 4 is mounted on the base 1, the support arm is provided with a bracket 5, which is able to rotate perpendicularly to the surface of the blade 2, a frame 6 is attached to the bracket 5, the electric motor 3 is secured to the frame 6, the first side of the frame 6 is attached to the bracket 5 via a dowel pin, the axis of blade 2 is arranged eccentrically with respect to the dowel pin, the cutting depth could be adjusted by lifting the other side of the frame 6.

The bracket 5 has a L-shaped configuration, a fan shaped plate 7 arranged perpendicularly to the surface of the blade 2 with an arc-groove 8 is provided on the support arm 4, the fan shaped plate is provided with a first bolt, the first bolt passes through the arc-groove connecting to the vertical part of the bracket, the cutting angle could be adjusted by change the position of the first bolt in the arc-groove.

The said frame 6 has a U-shaped configuration, the front end of the bottom of the frame 6 is connected to the horizontal part of the bracket 5 via a first dowel pin 10 and can rotate about the first dowel pin 10, a pressure plate 12 is attached to the rear side of the bracket 5 via a second dowel pin 11 and can rotate about the second dowel pin 11, the first and second dowel pins (10,11) are perpendicular to the surface of the blade 2, a elongated opening 13 is defined along the longitudinal direction of the pressure plate 12, a second bolt 14 passes through the elongated opening 13 coupled to the rear side of the frame 6, the frame 6 could be lifted or brought down by changing the position of the second bolt 14 in the elongated opening 13.

According to the above embodiment, put a slate or a tile on the table, adjust the position of the first bolt in the arc-groove corresponding with the designated the cutting angle, so as to adjust and fix the inclined angle of the blade. In accordance with the designated cutting depth, firstly, lift or bring down the rear end of the frame 6, then, fix the frame via the pressure plate 12 working in conjunction with the second bolt 14 in the elongated opening 13, in order to adjust the blade to a designated height, finally, push the table forward, the ongoing slate or tile could be cut.

## Claims

1. A cutting means for a slate cutter, comprising: a base (1), a blade (2) and a electric motor (3) for driving the blade (2), the cutting means wherein a support arm (4) is mounted on the base (1), the support arm (4) comprises a bracket (5) which is able to rotate perpendicularly to the surface of the blade (2), a frame (6) is attached to the bracket, the electric motor (3) is secured to the frame (6), one side of which is fixed to the bracket (5) with a dowel pin, which is located eccentrically with respect to the axis of the blade (2).

2. The cutting means of claim 1, wherein the bracket (5) has a L-shaped configuration, a fan shaped plate (7) arranged perpendicularly to the surface of the blade (2) with an arc-groove (8) is provided on the support arm (4), the fan shaped plate (7) is provided with a first bolt (9), which passes through the arc-groove (8) and is connected to the vertical part of the bracket (5).

3. The cutting means of claim 1 or 2, wherein the said frame (6) has a U-shaped configuration, the front side of the bottom of the frame (6) is connected to the horizontal part of the bracket (5) via a first dowel pin (10) and can rotate about the first dowel pin (10), a pressure plate (12) is attached to the rear side of the bracket (5) via a second dowel pin (11), and can rotate can about the second dowel pin (12), the first and second dowel pin (11,12) are perpendicular to the surface of the blade (2), a elongated opening (13) is defined along the longitudinal direction of the pressure plate (12), a second bolt (14) passes through the elongated opening (3) connected to the rear side of the frame (6).
